# EUROPÄISCHE PATENTSCHRIFT

(11) **EP 1 776 219 B1**
(45) Veröffentlichungstag und Bekanntmachung des Hinweises auf die Patenterteilung: **20.04.2011**
(21) Anmeldenummer: 05764314.0
(22) Anmeldetag: 09.08.2005
(51) Int. Cl.: B29C 44/04, B29C 44/60, B60R 13/08, G10K 11/168

(54) **VERFAHREN ZUM HERSTELLEN EINES SCHALLISOLATIONS-FORMTEILS MIT MASSE UND FEDER**
METHOD FOR PRODUCING A MOLDED SOUNDPROOF PART COMPRISING A MASS AND A SPRINGY PART
PROCEDE DE PRODUCTION D'UN ELEMENT D'INSONORISATION MOULE COMPRENANT UNE MASSE ET UNE MOUSSE RESSORT

(30) Priorität: 13.08.2004 DE 102004039438
(43) Veröffentlichungstag der Anmeldung: 25.04.2007
(73) Patentinhaber: International Automotive Components Group GmbH, 47804 Krefeld (DE)
(72) Erfinder: FRESER-WOLZENBURG, Thomas, 30827 Garbsen (DE); PÜSCHMANN, Eberhard, 29336 Nienhagen (DE); PRAHST, Georg-Wilhelm, 31867 Lauenau (DE); GROSSMANN, Maik, 29352 Adelheidsdorf (DE)
(74) Vertreter: Liesegang, Eva
(86) Internationale Anmeldenummer: PCT/EP2005/008642
(87) Internationale Veröffentlichungsnummer: WO 2006/018190

(56) Entgegenhaltungen:
- EP-A- 0 882 561
- DE-A1- 10 161 600
- DE-A1- 19 958 663
- US-A- 4 800 984
- US-A1- 2004 150 128

## Beschreibung

Die Erfindung betrifft ein Verfahren zum Herstellen eines Schallisolations-Formteils mit Masse und Feder.

Aus der EP 0 882 561 A1 ist ein Verfahren zum Herstellen eines Schallisolations-Formteils mit Masse und Feder bekannt, bei dem sowohl die Masse als auch die Feder auf der Grundlage des gleichen Materials, nämlich Polyurethan, hergestellt werden. Zur Bildung einer Masse werden Reaktionsstoffe und Füllstoffe in eine Form eingesprüht bzw. eingespritzt und zur Reaktion gebracht, wobei mittels eines Stempels eine Formgebung der Masse als eine Masseschicht erreicht wird. Anschließend wird Schaum als Feder auf der Masse in der gleichen Form ausgebildet und zwar mittels eines zweiten Formteils, durch das hindurch die Masseschicht hinterschäumt wird. Die Merkmale des Oberbegriffs des Anspruches 1 sind aus dieser Druckschrift somit bekannt.

Bei der bekannten Vorgehensweise wird eine durchgehende Masseschicht mit im Wesentlichen gleicher Dicke erzielt, wobei die Sichtseite durch entsprechende Ausbildung insbesondere der Form einzelne Profilierungen in Form von Rinnen oder Rippen aufweisen kann. Die Feder, oder Schaumschicht, kann ebenfalls verformt sein. Hierdurch kann das Formteil an bestimmte Verläufe einer schallzuisolierenden Fläche angepasst werden, an der das Formteil dann anzubringen ist.

US 2004/0150128 A1 beschreibt ein Verfahren zur Herstellung einer Masseschicht, bei dem zunächst eine Schwerschicht gleichmäßiger Dicke durch Kalandrieren erzeugt wird und anschließend extrudierte Zusätze auf die Schicht aufgebracht werden, welche sich mit dieser verbinden.

Der bei der Herstellung der Masse oder Schwerschicht erforderliche Materialaufwand ist erheblich und damit kostenintensiv. Außerdem ist eine einigermaßen wirtschaftliche Fertigung nur bei großen Stückzahlen möglich. Typische Formteile der beschriebenen Art werden in Fahrzeugen, insbesondere Personenkraftwagen verwendet. Personenkraftwagen werden bei gleichem Karosserieaufbau mit sehr unterschiedlichen Motoren angeboten, so dass bei der Auslegung des Formteiles und dabei insbesondere dessen Masse oder Schwerschicht die ungünstigste Konstellation eines Motors als Schallerreger und der durch das Formteil schallzudämmenden Fläche herangezogen werden muss.

Ausgehend hiervon ist es Aufgabe der vorliegenden Erfindung, eine Vorgehensweise anzugeben, mittels der bei geringem Materialaufwand hohe Schallisolation bzw. Schalldämmwirkung erreicht werden kann.

Gemäß der Erfindung wird das Einsprühen gesteuert gemäß dem kennzeichnenden Teil des Anspruchs 1.

Die Erfindung geht dabei von, der Erkenntnis aus, dass eine von einem Schallerreger angeregte Fläche den Schall sehr unterschiedlich überträgt, im Wesentlichen frequenzabhängig aber auch zum Teil ortsabhängig. Daraus folgt wiederum, dass es, im Rahmen von Fertigungstoleranzen, für jeden Flächenbereich einer schallzuisolierenden Fläche eine optimale Masse-Feder-Kombination gibt. Somit kann der Materialaufwand für die Masse und damit für das Formteil insgesamt optimiert werden. Es ist lediglich erforderlich, die Einrichtungen, die das Einsprühen bzw. Einspritzen der verschiedenen Materialien für Masse und Feder bewirken, entsprechend so zu steuern, dass örtlich die Reaktionsstoffe (einschließlich Treibmittel) und die Füllstoffe zur Bildung der Masse oder Schwerschicht in der örtlich erforderlichen Menge und Zusammensetzung zugeführt werden. Insbesondere kann in einfacher Weise der Füllstoffgehalt variiert werden, typisch zwischen 0 und 50 Volumenprozent, kann die Menge der zugeführten Reaktionsstoffe variiert werden, derart, dass unterschiedliche Dicken der Masse oder Schwerschicht erreicht werden, typisch 0,5 mm und mehr (durchaus auch 10 mm), und kann die Rezeptur der Reaktionsstoffe typisch angepasst werden, beispielsweise für Polyurethanwerkstoffe über die gesamte Bandbreite, die aus der Polyurethanchemie an sich bekannt ist.

Darüber hinaus ist es möglich, durch weitere Maßnahmen nicht nur auf die akustischen Eigenschaften Einfluß zu nehmen, sondern auch auf mechanische Eigenschaften wie mechanische Festigkeit oder Elastizität. Beispielsweise ist dort, wo im endgefertigten Formteil Durchbrüche vorzusehen sind, die mechanische Festigkeit zu erhöhen, während dort, wo im endgefertigten Formteil Dichtkanten zu anderen Teilen vorgesehen sein sollen, die Elastizität höher sein soll. In besonderer Weise kann dies ohne Beeinträchtigung der schalltechnischen bzw. akustischen Eigenschaften dadurch erreicht werden, dass bei Beibehaltung gleicher Dichte örtlich benachbarte Bereiche unterschiedliche Zusammensetzung der verwendeten Reaktionsstoffe besitzt.

Es zeigt sich, dass die Steuerung der die Materialien einbringenden Einrichtungen typisch automatisch mittels Rechnersteuerung erfolgt, wie dies an sich bei Robotersteuerungen grundsätzlich bekannt ist. Daraus folgt wiederum, dass der Ablauf der Steuerung schnell an geänderte Bedingungen angepasst werden kann, wie beispielsweise der Zuordnung eines anderen Schallerregers zu einer schallzuisolierenden Fläche. Somit ist es sogar möglich nicht nur Kleinserien sondern auch einzelne Formteile individuell in gewünschter Anzahl und Reihenfolge herzustellen, wie das bei der Just-in-time-Produktion erwünscht ist. Für geometriegleiche Formteile kann es, abhängig von der zu fertigenden Stückzahl pro Zeiteinheit, genügen, ein einziges Werkzeug vorzusehen. Abhängig von der Größe des Formteils kann es daher sogar möglich sein, eine fahrbare Fertigungseinrichtung zu gestalten, die flexibel vor Ort einsetzbar ist.

Insbesondere bei der Verwendung von ausschließlich PUR-Materialien können aufgrund der Möglichkeit, individuelle Formteile zu fertigen, auch Sonderwünsche etwa hinsichtlich der Farbgestaltung berücksichtigt werden.

Die Erfindung wird anhand der in der Zeichnung dargestellten Ausführungsbeispiele näher erläutert. Es zeigen:
- Fig. 1: in isometrischer Darstellung und im Schnitt den grundsätzlichen Aufbau eines gemäß der Erfindung herstellbaren Formteils,
- Fig. 2: schematisch in Aufsicht eine Abwicklung eines Formteils mit Angabe von gemäß der Erfindung zu erreichenden unterschiedlichen Massen bzw. Schwerschichtabschnitten,
- Fig. 3: eine perspektivische Ansicht eines kompliziert geformten Karosserieteils als Beispiel einer schallzuisolierenden Fläche mit der Angabe von Flächenabschnitten, in denen bestimmte mechanische Eigenschaften zuzüglich zu akustischen Eigenschaften erhalten werden sollen, wie das durch die Erfindung möglich ist,
- Fig. 4: die Anwendung der erfindungsgemäßen Vorgehensweise bei der Ausbildung von Kanten für z. B. Durchbrüche und
- Fig. 5: in einer Ansicht ähnlich Fig. 4 die Anwendung der Erfindung bei der Ausbildung elastischer Kanten bzw. Lippen.

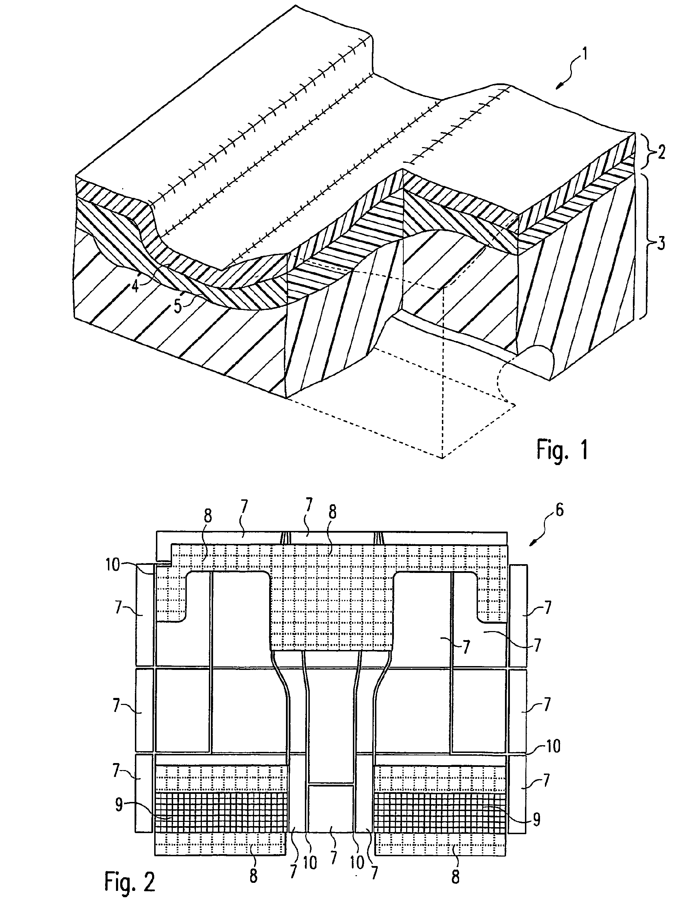

Fig. 1 zeigt einen Detailschnitt durch ein Formteil 1, bestehend aus einer Masse 2 bzw. Schwerschicht und einer Feder 3 bzw. Schaumschicht mit gleichem Materialaufbau, vorzugsweise Polyurethan.

Typisch ist eine Masse 2 oder Schwerschicht zellenarm oder zellenlos und weist hohes Flächengewicht auf, das im Wesentlichen durch Füllstoffe bewirkt ist. Die Feder 3 oder Schaumschicht ist dagegen reich an Zellen, weist geringen oder garkeinen Füllstoffgehalt auf und hat damit geringes Flächengewicht.

Masse 2 und Feder 3 wirken in an sich bekannter Weise zusammen, um eine Schalldämpfung zu erreichen. Ferner haben Dicke und Dichte sowie Porigkeit Einfluss auf die mechanischen Eigenschaften des Formteils 1 an einer bestimmten Stelle, wie das ebenfalls an sich bekannt ist.

Fig. 1 stellt schematisch dar, wie an einer bestimmten, dem Ausschnitt entsprechenden Stelle des Formteils 1 auf die Masse 2 örtlich eingewirkt ist. Beim Ausführungsbeispiel besteht die Masse 2 aus zweit diskreten Masseschichten 4 und 5. Die erste Masseschicht 4 kann für das gesamte Formteil 1 durchgehend in gleicher Weise vorgesehen sein und eine Tragschicht definieren, die die wesentlichen mechanischen Eigenschaften beeinflusst. Örtlich ist die zweite diskrete Masseschicht 5 aufgetragen, so dass örtlich die Masse 2 durch die beiden Schichten 4 und 5 gebildet ist. Die zweite diskrete Masseschicht 5 kann, aber muss nicht, die gleiche Zusammensetzung hinsichtlich der Reaktionsstoffe und der Füllstoffmenge haben wie die erste diskrete Masseschicht 4 und kann daher im gleichen Arbeitsgang einheitlich gefertigt sein. Sie kann auch nach Ausbildung der ersten diskreten Masseschicht 4 in einer Form auf diese nach Maßgabe der örtlichen Gegebenheiten zusätzlich aufgetragen werden. Aus Vorstehendem folgt, dass diese örtliche diskrete zweite Masseschicht 5 auch auf Basis einer anderen Zusammensetzung der Reaktionsstoffe und/oder einer anderen Menge an Füllstoff ausgebildet sein kann.

Die Abläufe beim Ausreagierenlassen der Reaktionsstoffe unter Berücksichtigung der Aufnahme der Füllstoffe bestimmen letztlich, ob es für eine bestimmte Stelle des Formteils 1 zweckmäßiger ist, die Masse 2 in Form mehrerer, beim Ausführungsbeispiel zweier aufeinanderfolgender Schichten 4, 5 auszubilden oder in Form einer einzigen Schicht , wobei der Verlauf deren Dicken und Dichten voneinander unabhängig ist. Nach Bildung der Masse 2 wird die Feder 3 in üblicher Weise durch Hinterschäumen erzeugt.

Nachdem eine schallzuisolierende Fläche üblicherweise eine sehr komplizierte dreidimensionale Form hat, erfolgt das Erzeugen der Masse 2, die konturverlaufend sein muss, zweckmäßig und gemäß der Erfindung direkt in eine der schallzuisolierenden Fläche nachgebildete Formhälfte einer Form. Die Ausbildung der Schaumschicht der Feder 3 kann dann sowohl in offener als auch in geschlossener Form erfolgen, wobei letzteres dann sinnvoll ist, wenn die der Masse 2 abgewandte Seite der Feder 3 ebenfalls strukturiert sein soll oder muss.

Somit kann das Formteil 1 mit Masse 2 und Feder 3 in einem Arbeitsgang hergestellt werden.

Es zeigt sich, dass die Ausbildung der Masse 2 auch gegen ein in eine Form eingelegtes Dekorteil wie einen Teppichzuschnitt oder eine Mateerialbahn erfolgen kann, aber auch die Ausbildung der Feder 3 zwischen der Masse 2 und einem Dekorteil wie einem Teppichzuschnitt oder einer Materialbahn erfolgen kann.

Fig. 2 zeigt die Abwicklung 6 eines Formteils, in der Flächenbereiche gekennzeichnet sind, deren Belegung mit Masse 2 unterschiedlich ist. Es sind durch unterschiedliche Tönungen bzw. Schraffuren Flächenbereiche 7, 8 und 9 definiert, bei denen unterschiedliche Flächengewichte (bzw. Dichten) der Masse 2 und/oder unterschiedliche Dicken der Masse 2 zu verwirklichen sind. In der Abwicklung 6 sind gleich schraffierte bzw. getönte Bereiche durch kanalartige Strukturen 10 voneinander getrennt. Damit wird dargestellt, dass bei der Aufbringung der Masse 2 in den entsprechenden Flächenbereichen der realen Form zur Bildung des realen Formteils aufgrund der dreidimensionalen Gegebenheiten zweckmäßig unterschiedliche Aufbringungsvorgänge vorzusehen sind, etwa mittels anderer Einrichtungen zum Zuführen der Reaktionsstoffe und Füllstoffe oder mittels einer zu ändernden Einstellung in der räumlichen Lage der Einrichtungen zur Einbringung der Reaktionsstoffe und der Füllstoffe.

Aus der vorstehenden Erläuterung ergibt sich ferner, dass in wesentlich größerer Vielfalt als durch Fig. 2 angedeutet, Flächenbereiche vorgesehen werden können, an denen die insgesamt über das Formteil ausgebildete Masse 2 unterschiedlichen Aufbau in seiner durch die Reaktionsstoffe und Füllstoffmenge bedingten Zusammensetzung als auch seiner Dicke erreichbar sind.

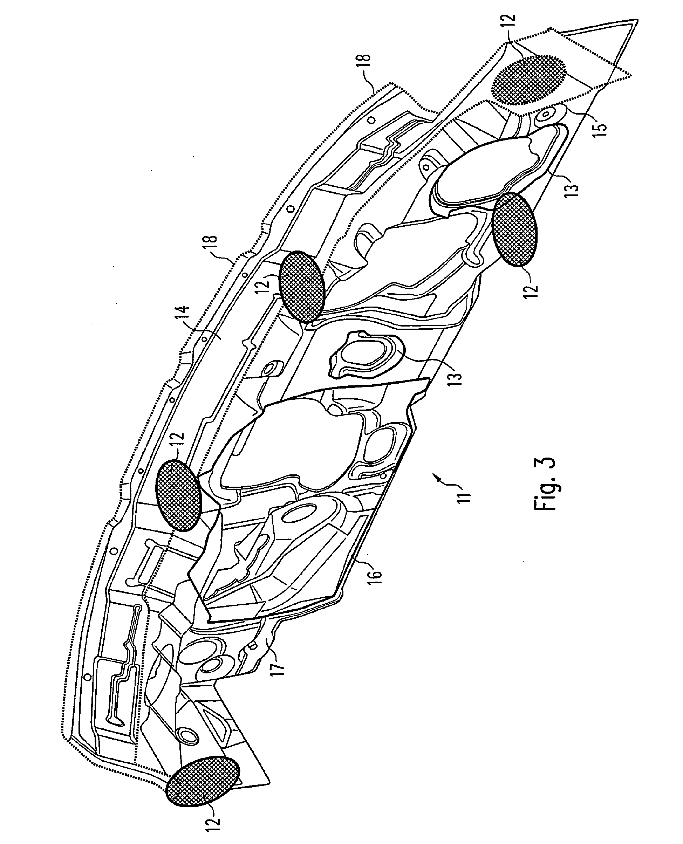

Fig. 3 zeigt in perspektivischer Ansicht schematisch den komplizierten dreidimensionalen Aufbau einer schallzuisolierenden Fläche, und zwar als Beispiel eine Stirnwand 11 für ein typisches Kraftfahrzeug. Ein nicht dargestelltes Formteil, das formschlüssig auf diese Stirnwand 11 aufzubringen ist, soll örtlich unterschiedliche Eigenschaften besitzen, die durch unterschiedliche Umrahmungen und Tönungen dargestellt sind. Dabei handelt es sich um Kombinationen von sowohl mechanischen Eigenschaften, die durch Worte darstellbar sind, als auch akustischen Eigenschaften, die durch Flächenmassen bzw. Flächengewichte definierbar sind. Die Angaben sind selbstverständlich beispielhaft und reale, einer beliebigen Stirnwand 11 zuzuordnende Formteile können örtlich stark abweichende sowohl mechanische als auch akustische Eigenschaften aufweisen. Im Beispiel sollen Flächenbereiche 12 hohe Festigkeit mit einem Flächengewicht von etwa 1 kg/m² aufweisen, sollen Flächenbereiche 13 weichelastisch sein mit einem Flächengewicht von 2 kg/m², sollen Flächenbereiche 14 insgesamt gesehen leichtgewichtig sein mit einem Flächengewicht von 1 kg/m², sollen Flächenbereiche 15 sowohl hohe Festigkeit aufweisen, sowie hart und schwer sein als auch ein Flächengewicht von beispielsweise 4,5 kg/m² aufweisen, sollen Flächenbereiche 16 schwer mit einem Flächengewicht von etwa 4,5 kg/m² sein, sollen übrigen Flächenbereiche 17 ein Flächengewicht von 2 kg/m² aufweisen ohne vorgegebene mechanische Eigenschaft und sollen Bereiche 18 bei einem Flächengewicht von 1 kg/m² weichelastisch sein und zu einer Auslauflippe geformt sein. Aus Vorstehendem ergibt sich, dass durchgehend eine Masse 2 mit mindestens einem Flächengewicht von 1 kg/m² vorgesehen sein muss, wobei örtlich höhere Flächengewichte vorgesehen sein sollen, wobei ferner örtlich zusätzliche bestimmte mechnanischen Eigenschaften erreicht werden sollen.

Die mechanischen Eigenschaften sind einerseits durch Einflussnahme auf die örtliche Zusammensetzung der Reaktionsstoffgemische und die Art und den Anteil der Feststoffe möglich, aber auch durch Einwirken auf die Schaumbildung. Letzteres ist beispielsweise möglich in der Art und Weise wie dies in der EP 1 237 751 A1 der vorliegenden Anmelderin erläutert ist. Jedoch kann auch in anderer Art und Weise auf die mechanischen Eigenschaften Einfluss genommen werden.

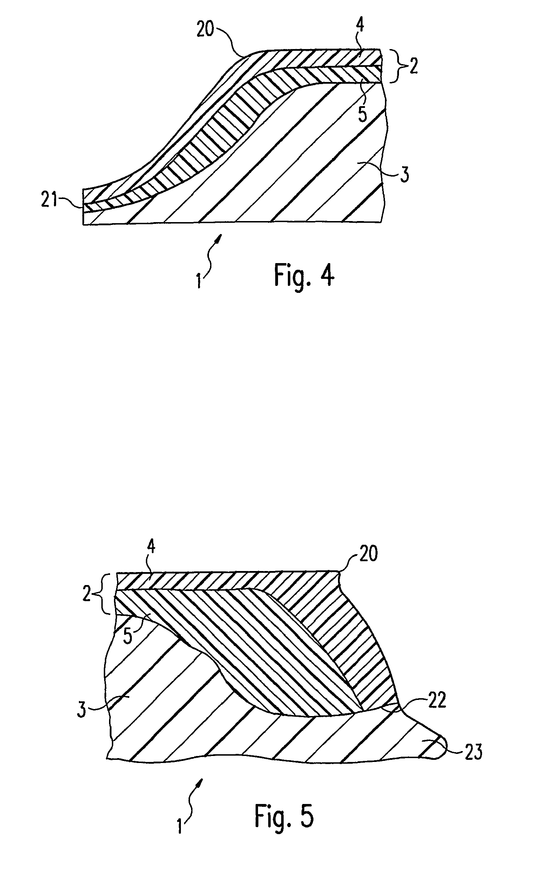

Fig. 4 und Fig. 5 zeigen im Schnitt, wie durch die Einflussnahme auf die Masse an Ränderen und Kanten deren mechanische Eigenschaften beeinflusst werden können. Dabei ist darauf zu verweisen, dass dort die akustischen Eigenschaften von eher untergeordneter Bedeutung sind.

Fig. 4 zeigt in Anlehnung an Fig. 1 bei einem Formteil 1 bestehend aus Masse 2 und Feder 3 eine körperlich ausgeprägte Kante 20, in deren Bereich sowohl erste diskrete Masseschicht 4 als auch zweite diskrete Masseschicht 5 deutlich dicker ausgebildet sind als in benachbarten Bereichen. In einem Außenrandbereich 21 bei der gegebenenfalls auch kein Schaum 3 mehr vorgesehen sein kann, etwa um Durchbrüche zu definieren, ist vergleichsweise hohe Steifigkeit erreicht, in Zusammenwirken mit der Kante 20.

Fig. 5 zeigt ebenfalls eine ausgeprägte Kante 20 in Anlehnung in Fig. 4, wobei die beiden Schichten 4 und 5 der Masse 2 innerhalb des Formteils enden, wie bei 22 dargestellt, derart, dass der Schaum der Feder 3, wie bei 23 dargestellt, eine nach außen reichende Lippe bildet, die bei Anlage an konkrete Elemente einen elastischen Abschluss erreichen kann.

Somit sind in einer Form, deren Unterform einen einer schallzuisolierenden Fläche angepassten Verlauf besitzt, gemäß der Erfindung individuell nach Wunsch ausgebildete Formteile zuordenbar.

Einer Form kann dabei eine oder können auch mehrere Einrichtungen zugeordnet sein, mittels denen die Zufuhr der Reaktionsstoffe innerhalb des Bereiches, der für die Erzeugung des Produktes zulässig ist, in wählbarer Weise nach Menge und Anteilen einstellbar sind, wobei auch Füllstoffe in der innerhalb des zulässigen Bereiches in wählbarer Weise zugemischt werden können. Beispielsweise kann eine Vorgehensweise gemäß DE 101 61 600 A1 der Anmelderin angewendet werden, die den variablen und gleichzeiten Eintrag von Füllstoffen in einen Reaktionsstoff-Gemischstrahl erlaubt.

Die Erfindung ist insbesondere anwendbar auf die Herstellung von Formteilen für Kraftfahrzeuge insbesondere Personenkraftwagen. Bekanntlich werden dort einem zumindest abschnittsweise identischen Karosserieaufbau eine Vielfalt unterschiedlicher Antriebsaggregate zugeordnet. Dies bedeutet jedoch, dass die unterschiedlichen Antriebsaggregate als Schallerreger schallzuisolierende Flächen in ggf. sogar äußerst unterschiedlicher Weise anregen, sowohl hinsichtlich der übertragenen Frequenzen als auch deren jeweiliger Intensität als auch hinsichtlich der Lage der Orte maximaler Schallübertragung. Dabei können sich die Verhältnisse auch bei verschiedenen Fahrzeugtypen (wie PKW, Cabrio, Kombi) für solche Karosserieteile ändern, die geometrisch gleich geformt sind, wie beispielsweise eine Stirnwand 11 gemäß Fig. 3 zwischen Fahrgastraum und Motorraum. Andererseits hat die Erfahrung gezeigt, dass die Zuordnung eines Karosserieteils zu einem bestimmten Antriebsaggregat und damit einem bestimmten Schallerreger (bei gleichem Fahrzeugtyp) zu in großem Umfang ähnlichen Schallübertragungsverhältnissen bei einer schallzuisolierenden Fläche führt. Durch die Erfindung kann daher zum einen in einfacher Weise eine optimale akustische Gestaltung eines Formteils erreicht werden unter Berücksichtigung mechanischer Vorgaben, wobei zum anderen eine erhebliche Materialeinsparung schon deshalb möglich ist, weil das Material für die Masse optimal angepasst werden kann und die Masse den größten Materialanteil aufweist.

Da gemäß der Erfindung diese Optimierung für jede der möglichen Zuordnungen einer geometriegleichen schallzuisolierenden Fläche zu einem Schallerreger, nämlich einem Antriebsaggregat, unter Berücksichtigung auch des Fahrzeugtyps möglich ist, kann unter Zugrundelegung der gleichen Form, die der schallzudämmenden Fläche konstruktiv entspricht, individuell und nach Bedarf jedes erforderliche Formteil optimal gefertigt werden.

Somit ist das erfindungsgemäße Verfahren auch geeignet für die Fertigung von Kleinserien und insbesondere auch für die zur Verfügungstellung von geometriegleichen Formteilen unterschiedlichen Aufbaus in vorgegebener Reihenfolge, wie das beispielsweise für die Just-in-time-Fertigung gefordert wird.

Die mindestens eine Einrichtung zur Einbringung der Reaktionsstoffe und Füllstoffe in die Form für die Erzeugung der Masse 2 wird zweckmäßig nach Art einer Robotersteuerung automatisch gesteuert, wobei Programme zur automatischen Steuerung von Robotern, die zur Beschichtung komplizierter dreidimensionaler Flächen dienen, grundsätzlich für Lackierungen an sich bekannt sind. Zusätzlich muss jedoch die durch die Erfindung erzielte örtlich andere Mischung der zugeführten Reaktionsstoffe zur Erreichung der örtlichen mechanischen und akustischen Eigenschaften einerseits sowie auch die notwendige Dicke der zu erreichenden Masse 2 andererseits bei der Programmierung berücksichtigt werden.

Für die erwähnte typische Verwendung erfindungsgemäß hergestellter Formteile wird zunächst ein Prototyp der schallzuisolierender Fläche zusammen mit einem Prototyp eines Schallerregers hinsichtlich des Schallübertragungsverhaltens untersucht. Es wird dann festgelegt, welche Flächenbereiche der schallzuisolierenden Fläche einer besonderen über eine Mindestbedämpfung hinausgehende Bedämpfung bedürfen. Ausgehend von vom Kunden vorgegebenen mechanischen Vorgaben und räumlichen Vorgaben hinsichtlich der Gestaltung des Formteils, insbesondere auf der von der schallzuisolierender Fläche abgewandten Seite kann dann der ideale Aufbau eines Formteils bestimmt werden. In der Praxis kann dabei eine Klassifizierung über Flächenbereiche durchgeführt werden, da zum einen Fertigungstoleranzen bei der Herstellung der schallzuisolierenden Fläche und des Schallerregers und zum anderen Arbeitstoleranzen bei der Steuerung der Einrichtungen zur Einbringung der Reaktionsstoffe und Füllstoffe zu berücksichtigen sind bzw. in Kauf genommen werden müssen. Es wird somit zu einer Zuordnung und Klassifizierung wie sie anhand Fig. 3 erläutert worden ist, gelangt. Somit kann ein Satz von Parametern bzw. eine Parameter Matrix erstellt werden, die für eine vorgegebene Zuordnung eines bestimmten Schallerregers zu der vorgegebenen schallisolierten Fläche spezifiziert werden, das bzw. die die gezielte Steuerung der mindestens einen Einrichtung zu Einbringung der Reaktionsstoffe (einschließlich Treibmittel) und Füllstoffe erlaubt.

Diese Untersuchung und Beurteilung und Klassifizierung kann nun für jede Zuordnung der geometriegleichen schallzuisolierenden Fläche zu einem anderen Schallerreger durchgeführt werden. Erleichterungen können sich bei der Untersuchung und Beurteilung ergeben, falls die unterschiedlichen Schallerreger typähnlich sind, wie dies beispielsweise bei Automotoren unterschiedlicher Hubräume und gleicher Einbaulage der Fall sein kann. Es kann sich dabei durchaus ergeben, dass für mehrere unterschiedliche Schallerreger unter Berücksichtigung der erwähnten notwendigen Toleranzen im Wesentlichen gleiche Klassifizierungen ergeben. Dies würde den Programmierungsaufwand erleichtern.

Die verschiedenen unterschiedlichen Steuerprogramme zur Ansteuerung der mindestens einen Einrichtung zur Einbringung der Reaktionsstoffe und Füllstoffe in die zu einer vorgegebenen schallzuisolierenden Fläche korrespondierende Form können dann frei wählbar abgerufen und zur Herstellung individueller Formteile herangezogen werden.

Nachdem es sich insbesondere bei Polyurethanmaterialien typisch um pumpbare Ausgangsprodukte für die Reaktionsstoffe (Poliole, Isocyanate, sowie Treibmittel) und Füllstoffe handelt, kann eine Anlage zur Durchführung des Verfahrens, also zur Herstellung erfindungsgemäß ausgebildeter Formteile als fahrbare Einheit ausgebildet werden, sofern es die Geometrie der Formteile und damit der Form zulässt.

Es sei erwähnt, dass es darüber hinaus möglich ist, auch Drittteile wie zusätzliche Bauelemente vor, während oder nach der Bildung der Masse 2 in eine Form einzubringen, falls es erforderlich ist oder vom Kunden gewünscht wird.

Schließlich ist noch zu erwähnen, dass, da gleiche Materialen für sowohl Masse als auch Feder verwendet werden, die Recyclingfähigkeit deutlich erhöht ist.

## Patentansprüche

1. Verfahren zum Herstellen eines Schallisolations-Formteils mit Masse und Feder, wobei sowohl Masse als auch Feder auf Grundlage des gleichen Materials, insbesondere Polyurethan, hergestellt werden, wobei zur Bildung der Masse (2) Reaktionsstoffe und Füllstoffe in eine Form eingesprüht bzw. eingespritzt und zur Reaktion gebracht werden und anschließend Schaum als Feder (3) auf der Masse (2) in derselben Form ausgebildet wird, **dadurch gekennzeichnet, dass** das Einsprühen bzw. Einspritzen der Reaktionsstoffe und der Füllstoffe so gesteuert wird, dass zur Bildung der Masse (2) abhängig von der örtlich durch die Masse (2) und die Feder (3) zu erreichenden Schalldämmung die Reaktionsstoffe und die Füllstoffe in die Form in der örtlich erforderlichen Menge und/oder Zusammensetzung zugeführt werden.

2. Verfahren nach Anspruch 1, **dadurch gekennzeichnet, dass** die die Massen bildenden Reaktionsstoffe und Füllstoffe gegen ein zuvor in die Form eingelegtes Dekorteil, insbesondere einen Teppichzuschnitt, eingesprüht werden.

3. Verfahren nach Anspruch 1 oder 2, **dadurch gekennzeichnet, dass** die Reaktionsstoffe und die Füllstoffe mittels körperlich getrennter Sprüheinrichtungen eingesprüht werden.

4. Verfahren nach Anspruch 1 oder 2, **dadurch gekennzeichnet, dass** die Reaktionsstoffe und die Füllstoffe mittels einer einzigen Sprüheinrichtung, die die Vermischung bewirkt, eingesprüht werden.

5. Verfahren nach einem der Ansprüche 1 bis 4, **dadurch gekennzeichnet, dass** die Parameter zur Steuerung der Menge und/oder Zusammensetzung der Reaktionsstoffe und der Füllstoffe ausgehend von einer Analyse einer vorgegebenen schallzuisolierenden Fläche (11) und eines vorgegebenen Schallerregers unter Berücksichtigung der Feder (3) bestimmt werden.

6. Verfahren nach Anspruch 5, **dadurch gekennzeichnet, dass** bei möglicher Zuordnung unterschiedlicher vorgegebener Schallerreger zu einer vorgegebenen schallzuisolierenden Fläche (11) entsprechende unterschiedliche Sätze von Parametern bestimmt werden und abhängig von einer vorgegebenen Zuordnung eines ausgewählten der Schallerreger zu der schallzuisolierenden Fläche (11) das jeweilige Formteil (1) unter Heranziehung der so bestimmten Zuordnung hergestellt wird.

7. Verfahren nach einem der Ansprüche 1 bis 6, **dadurch gekennzeichnet, dass** das Einsprühen so gesteuert wird, dass zur Bildung der Masse (2) die Reaktionsstoffe und die Füllstoffe in die Form ferner örtlich in unterschiedlicher Menge und/oder Zusammensetzung zugeführt werden abhängig von örtlich zu erreichenden mechanischen Eigenschaften.

8. Verfahren nach einem der Ansprüche 1 bis 7, **dadurch gekennzeichnet, dass** das Ausbilden des Schaums der Feder (3) so gesteuert wird, dass die entsprechenden Reaktionsstoffe, und gegebenenfalls Füllstoffe, in die Form örtlich in unterschiedlicher Zusammensetzung und/oder Menge zugeführt werden abhängig von örtlich zu erreichenden mechanischen Eigenschaften.

9. Verfahren nach Anspruch 7 oder 8, **dadurch gekennzeichnet, dass** zur Erreichung von Bereichen höherer Steifigkeit bei im Wesentlichen gleicher schalltechnischer Wirkung die örtlich unterschiedliche Zusammensetzung der Reaktionsstoffe und Füllstoffe so gesteuert wird, dass bei Masse (2) bzw. Feder (3) im Wesentlichen gleiche Dichte zu umgebenden Bereichen niedrigerer Steifigkeit erreicht wird.

10. Verfahren nach einem der Ansprüche 1 bis 9, **dadurch gekennzeichnet, dass** vor und/oder während und/oder nach Ausbilden der Masse (2) zusätzliche Bauelemente an vorgegebenen Stellen in die Form eingebracht werden.

## Claims

1. Method of producing a sound insulation molded part comprising mass and spring, wherein both mass and spring are produced on the basis of the same material, in particular, polyurethane,
wherein for the formation of the mass (2), reaction substances and fillers are sprayed or injected into a mold and brought to reaction and then foam as a spring (3) is formed on the mass in the same mold,
**characterized in that**
the spraying or injecting of the reaction substances and fillers is controlled such that, for the formation of the mass (2), the reaction substances and the fillers are supplied into the mold in locally required quantity and/or composition, dependent upon the sound damping to be locally achieved by the mass (2) and the spring (3).

2. Method according to claim 1, **characterized in that** the reaction substances and fillers forming the masses are sprayed in against a decorative part placed previously into the mold, in particular a carpet cutting.

3. Method according to claim 1 or 2, **characterized in that** the reaction substances and the fillers are sprayed by means of physically separate spraying devices.

4. Method according to claim 1 or 2, **characterized in that** the reaction substances and the fillers are sprayed by means of a single spraying device which causes intermixing.

5. Method according to any of claims 1 to 4, **characterized in that** the parameters for the control of the quantity and/or composition of the reaction substances and the fillers are determined on the basis of an analysis of a predetermined surface (11) to be sound insulated and a predetermined sound generator, taking into consideration the spring (3).

6. Method according to claim 5, **characterized in that**, with a possible association of different predetermined sound generators to a predetermined surface (11) to be sound insulated, corresponding different sets of parameters are determined and, dependent upon a predetermined association of a selected sound generator to the surface (11) to be sound insulated, the respective molded part (1) is produced taking into account the so-determined association.

7. Method according to any of claims 1 to 6, **characterized in that** spraying is controlled so that, for the formation of the mass (2) the reaction substances and the fillers are further delivered into the mold in locally different quantity and/or composition depending on mechanical properties to be achieved locally.

8. Method according to any of claims 1 to 7, **characterized in that** forming of the foam of the spring (3) is controlled so that the corresponding reaction substances and, if applicable, fillers are delivered into the mold in locally different composition and/or quantity depending on mechanical properties to be achieved locally.

9. Method according to claim 7 or 8, **characterized in that**, for the formation of regions of higher stiffness with substantially the same sound engineering effect, the locally different composition of the reaction substances and fillers is controlled so that, for the mass (2) or spring (3), there is achieved substantially the same density as surrounding areas of lower stiffness.

10. Method according to any of claims 1 to 9, **characterized in that**, before and/or during and/or after formation of the mass (2), additional construction elements are put into the mold at predetermined locations.

## Revendications

1. Procédé de production d'un élément d'insonorisation moulé comprenant une masse et une mousse ressort, dans lequel aussi bien la masse que la mousse ressort sont réalisées à partir du même matériau, en particulier du polyuréthane, et dans lequel, pour former la masse (2), des matières de réaction et des matières de charge sont introduites par pulvérisation ou injection et mises en réaction, puis de la mousse en tant que ressort (3) est formée sur la masse (2) dans le même moule, **caractérisé en ce que** la pulvérisation ou l'injection des matières de réaction et des matières de charge est commandée de telle sorte que, pour former la masse (2) en fonction de l'isolation acoustique devant être obtenue localement à travers la masse (2) et la mousse ressort (3), les matières de réaction et les matières de charge soient acheminées dans le moule dans la quantité et/ou avec la composition requises localement.

2. Procédé selon la revendication 1, **caractérisé en ce que** les matières de réaction et matières de charge formant les masses sont pulvérisées contre un élément de décoration préalablement inséré dans le moule, en particulier une découpe de tapis.

3. Procédé selon la revendication 1 ou 2, **caractérisé en ce que** les matières de réaction et les matières de charge sont pulvérisées au moyen de dispositifs de pulvérisation physiquement séparés.

4. Procédé selon la revendication 1 ou 2, **caractérisé en ce que** les matières de réaction et les matières de charge sont pulvérisées au moyen d'un dispositif de pulvérisation unique qui opère le mélange.

5. Procédé selon l'une des revendications 1 à 4, **caractérisé en ce que** les paramètres de commande de la quantité et/ou de la composition des matières de réaction et des matières de charge sont définis à partir d'une analyse d'une surface à insonoriser (11) prédéterminée et d'un excitateur acoustique prédéterminé en tenant compte de la mousse ressort (3).

6. Procédé selon la revendication 5, **caractérisé en ce qu'**en cas de correspondance éventuelle de différents excitateurs acoustiques prédéterminés avec une surface à insonoriser (11) prédéterminée, différents ensembles correspondants de paramètres sont déterminés et, en fonction d'une correspondance prédéterminée de l'un sélectionné des excitateurs acoustiques avec la surface à insonoriser (11), l'élément moulé (1) respectif est fabriqué en utilisant la correspondance ainsi définie.

7. Procédé selon l'une des revendications 1 à 6, **caractérisé en ce que** la pulvérisation est commandée de telle sorte que, pour former la masse (2), les matières de réaction et les matières de remplissage soient acheminées dans le moule, en outre, localement dans une quantité et/ou une composition différentes, en fonction de caractéristiques mécaniques devant être obtenues localement.

8. Procédé selon l'une des revendications 1 à 7, **caractérisé en ce que** la formation de la mousse ressort (3) est commandée de telle sorte que les matières de réaction correspondantes, et éventuellement des matières de remplissage, soient acheminées dans le moule localement dans une composition et/ou quantité différentes, en fonction de caractéristiques mécaniques devant être obtenues localement.

9. Procédé selon la revendication 7 ou 8, **caractérisé en ce que**, pour obtenir des zones de rigidité plus élevée pour un effet technique acoustique sensiblement identique, la composition localement différente des matières de réaction et des matières de charge est commandée de façon à obtenir, au niveau de la masse (2) ou de la mousse ressort (3), une densité sensiblement égale à des zones environnantes de rigidité plus faible.

10. Procédé selon l'une des revendications 1 à 9, **caractérisé en ce qu'**on introduit dans le moule, avant et/ou pendant et /ou après formation de la masse (2), des éléments de construction supplémentaires à des endroits prédéterminés.
